# EUROPÄISCHE PATENTSCHRIFT

(11) **EP 0 830 923 B1**
(45) Veröffentlichungstag und Bekanntmachung des Hinweises auf die Patenterteilung: **13.08.2003**
(21) Anmeldenummer: 96115205.5
(22) Anmeldetag: 23.09.1996
(51) Int. Cl.: B27C 5/10, B23Q 16/00, B23Q 9/00

(54) **Handwerkzeug**
Hand tool
Outil à main

(43) Veröffentlichungstag der Anmeldung: 25.03.1998
(73) Patentinhaber: CEKA ELEKTROWERKZEUGE AG + Co.KG, CH-9630 Wattwil (CH)
(72) Erfinder: Kress, Willy, 72406 Bisingen (DE); Dürr, Paul, 9631 Ulisbach (CH)
(74) Vertreter: Jakelski, Joachim, Dr.

(56) Entgegenhaltungen:
- EP-A- 0 716 898
- DE-A- 2 749 582
- DE-A- 3 022 233
- DE-A- 4 409 312
- DE-U- 8 618 124
- FR-A- 1 020 598
- GB-A- 1 103 967
- GB-A- 2 121 565
- US-A- 1 976 107
- US-A- 2 601 434
- US-A- 3 407 704
- US-A- 3 494 395
- US-A- 3 768 363
- US-A- 3 893 372
- US-A- 4 187 046
- US-A- 4 335 765
- US-A- 4 461 330
- US-A- 4 627 773
- US-A- 4 674 548
- US-A- 5 025 548
- US-A- 5 103 566

## Beschreibung

Die Erfindung betrifft ein Handwerkzeug mit einem länglichen Gehäuse mit einem in dem Gehäuse angeordneten Motor und mit einem von dem Motor über ein Getriebe angetriebenen, vertikal zur Längsrichtung verstellbaren Fräskopf.

Derartige Handwerkzeuge werden als Oberfräsen insbesondere bei der Holzbearbeitung eingesetzt. Durch die vertikale Verstellmöglichkeit kann die Frästiefe verändert werden. Dabei sind zur vertikalen Verstellung an einem Frästisch Führungsstangen befestigt, an denen das Gehäuse zusammen mit dem in diesem angeordneten Motor und dem Getriebe sowie dem Fräskopf vertikal verschieblich geführt und arretierbar sind.

Eine derartige vertikale Verstellung des Fräskopfes ist umständlich, da der Fräskopf immer nur zusammen mit dem Motor und dem Getriebe verstellt werden kann. Dies ist nicht nur unhandlich, sondern birgt darüber hinaus die Gefahr in sich, daß sich die verschiebbaren Teile in den Führungsstangen verkanten und dadurch nur ruckartig und wenig präzise verschoben werden können.

Außerdem ergibt sich durch die bei diesem Handwerkzeug erforderliche Übereinanderanordnung von Fräskopfgetriebe und Motor eine sehr ungünstige, da hochliegende Position des Schwerpunktes, welche das gesamte Handwerkzeug leicht kippen läßt und insoweit unhandlich macht, so daß praktisch eine Zweihand-Bedienung erforderlich ist.

Schließlich ist auch keinerlei Verschwenkung des Fräskopfes aus der Vertikalrichtung möglich. Um z. B. in verschwenkter Richtung fräsen zu können, muß daher der Fräskopf durch einen Fräskopf ersetzt werden, der so angeschrägt ist, daß ein Fräsen schräg zur Vertikalrichtung möglich ist. Zum Beispiel kann ein solcher Fräskopf beispielsweise kegelförmig ausgebildet sein oder eine andere beliebige Gestalt aufweisen. Es versteht sich, daß der Einsatz einer Vielzahl von hochwertigen und teuren Fräsköpfen nicht nur die Bearbeitungskosten drastisch erhöht, sondern darüber hinaus - da sämtliche Fräsköpfe zusammen mit dem Handwerkzeug mitgeführt werden müssen-auch das gesamte Handwerkzeug unhandlich machen.

Das in Figur 4 der US 3 494 395 A gezeigte Handwerhzeug weist keine Einstellung des Fräskopfes in vertikalrichtung auf. Die Austriebswellen Motor-Fräskopf sind schräg zweinander geneigt. Ausserdem sind Verschiedene Trimmer aus US 4 187 046 A und US 3 893 372 vorbekannt.

Der Erfindung liegt daher die Aufgabe zugrunde, ein Handwerkzeug der gattungsgemäßen Art derart zu verbessern, daß dieses bei einfachster Handhabung auf die unterschiedlichste Weise eingesetzt werden kann.

Diese Aufgabe wird bei einem Handwerkzeug der eingangs beschriebenen Art erfindungsgemäß durch die Merkmale des Anspruchs 1 gelöst.

Die liegende Anordnung des Motors, derart, daß seine Antriebswelle im wesentlichen senkrecht zur Drehachse des Fräskopfes angeordnet ist, hat den großen Vorteil, daß der Schwerpunkt des gesamten Handwerkzeugs niedrig liegt, wodurch eine problemlose, besonders ergonomische Ausbildung und eine problemlose Handhabung des Handwerkzeugs ermöglicht wird. Die erste Einstelleinrichtung, welche eine manuelle, werkzeuglose Einstellung des Fräskopfes in Vertikalrichtung unabhängig von Motor und Getriebe, d.h. ohne Veränderung der Lage des Motors und des Getriebes ermöglicht, hat in Verbindung mit dem liegend angeordneten Motor den großen Vorteil, daß das Handwerkzeug auf einfachste Weise bedient werden kann. Insbesondere ermöglicht es diese Einstelleinrichtung, daß der Fräskopf nicht immer zusammen mit dem Motor und dem Getriebe verschoben werden muß, sondern unabhängig von dem Motor und dem Getriebe auf einfache und bedienungsfreundliche Weise verstellt werden kann. Diese Einstelleinrichtung ermöglicht in Zusammenwirkung mit dem liegend angeordneten Motor, dessen Lage bei der Vertikalverschiebung nicht geändert wird, eine besonders vorteilhafte einhändige Handhabung. Das Vorsehen der zweiten Einstelleinrichtung, welche manuell und werkzeuglos eine seitliche Verschwenkung des Fräskopfes ermöglicht, hat den großen Vorteil, daß praktisch in jeder beliebigen Richtung mit einem einzigen, z.B. stiftförmigen Fräskopf gefräst werden kann. Hierdurch erübrigt sich das Mitführen von einer Vielzahl von unterschiedlich ausgebildeten Fräsköpfen. Darüber hinaus ermöglicht die zweite Einstelleinrichtung in Verbindung mit dem liegend und im wesentlichen unverändert angeordneten Motor aufgrund des hierdurch niedrigliegenden Schwerpunktes eine besonders einfache Verschwenkung.

Gerade auch durch die Kombination des liegend angeordneten Motors, der ersten und der zweiten Einstelleinrichtung wird eine besonders leichte, insbesondere auch einhändig handzuhabende Handwerkzeugmaschine ermöglicht.

Rein prinzipiell sind die unterschiedlichsten Getriebe zur Übertragung der Motorleistung auf den Fräskopf denkbar. Vorteilhafterweise ist das Getriebe jedoch ein Winkelgetriebe, welches eine einfache Kopplung der senkrecht zum Fräskopf liegenden Antriebswelle an den Fräskopf ermöglicht.

Von Vorteil ist es, daß das Winkelgetriebe sowohl eine drehzahlerhöhende als auch eine drehzahlsenkende und dabei drehmomenterhöhende Übersetzung aufweist. Auf diese Weise kann die Drehgeschwindigkeit des Fräskopfes auf das zu bearbeitende Werkstück auf einfache Weise angepaßt werden. Die drehzahlsenkende und dabei drehmomenterhöhende Übersetzung ermöglicht insbesondere auch den Einsatz eines besonders kleinen Motors, da durch die Drehmomenterhöhung auch Werkstücke bearbeitet werden können, die ansonsten einen größeren Motor erfordern würden.

Die erste Einstelleinrichtung kann prinzipiell auf die unterschiedlichste Art und Weise ausgebildet sein. Insbesondere im Hinblick auf eine besonders einfache Bedienung umfaßt die erste Einstelleinrichtung jedoch ein vertikal bewegliches Gehäuseteil und ein Arretierelement zur vertikalen Arretierung einer gegen die Vorspannung einer Feder niederdrückbaren, in dem beweglichen Gehäuseteil gelagerten Abtriebswelle, die zusammen mit dem beweglichen Gehäuseteil vertikal verschieblich und verdrehsicher in wenigstens einem die Welle konzentrisch umgebenden Getriebezahnrad des Winkelgetriebes geführt und mit dem Fräskopf verbunden ist.

Durch das Vorsehen eines vertikal beweglichen Gehäuseteils, eines Arretierelements und einer gegen die Vorspannung einer Feder niederdrückbaren in dem beweglichen Gehäuseteil gelagerten Abtriebswelle, die zusammen mit dem beweglichen Gehäuseteil vertikal verschieblich und verdrehsicher in wenigstens einem die Welle konzentrisch umgebenen Getriebezahnrad des Winkelgetriebes geführt und mit dem Fräskopf verbunden ist, wird eine einfache Verstellung des Fräskopfes durch Niederdrücken des beweglichen Gehäuseteils und damit der in diesem angeordneten Abtriebswelle und eine leichte Arretierung des auf diese Weise vertikal verschobenen Fräskopfes durch die Arretierung des beweglichen Gehäuseteils ermöglicht.

Insbesondere um eine einhändige Bedienung zu ermöglichen, umfaßt das Arretierelement vorteilhafterweise einen in dem beweglichen Gehäuseteil drehbar gelagerten Knauf mit einer Innenverzahnung und ein in die Innenverzahnung eingreifendes Zahnrad sowie eine mit dem Zahnrad verbundene Schraube, durch die durch Drehen des Knaufs das bewegliche Gehäuseteil festgeklemmt wird.

Diese Festklemmung geschieht auf besonders einfache und daher vorteilhafte Weise dadurch, daß die Schraube an ihrem unteren, dem Zahnrad abgewandten Ende Spannbacken in einer Spannhülse aufspreizt.

Eine andere vorteilhafte Ausführungsform des Arretierelements ist eine seitlich an dem Gehäuse angeordnete Spannschraube oder ein Spannhebel, die/der das bewegliche Gehäuseteil in dem Gehäuse festklemmt.

Die vertikal verschiebliche und verdrehsichere Abtriebswelle kann auf die unterschiedlichste Weise ausgebildet sein. Vorteilhafterweise ist diese Abtriebswelle jedoch eine Mehrkeil- oder Nutenwelle, die einfach herzustellen ist und eine sichere Funktion gewährleistet.

Um insbesondere beim Austausch des Fräskopfs das Verletzungsrisiko möglichst gering zu halten, ist die Antriebsund/oder Abtriebswelle und/oder der Fräskopf über einen gegen eine Rückstellfeder vorgespannten Druckknopf oder eine sogenannte Lock-Drucktaste arretierbar.

Die zweite Einstelleinrichtung könnte rein prinzipiell auf die unterschiedlichste Weise realisiert werden. Vorteilhafterweise umfaßt die zweite Einstelleinrichtung jedoch einen Frästisch mit einem mit diesem verbundenen ersten Element, welches an einem auf das erste Element angepaßten, an dem Gehäuse befestigten zweiten Element arretierbar ist. Durch das Vorsehen eines Frästisches und des ersten und des zweiten Elements wird zum einen auf einfache Weise eine Auflagefläche des Handwerkzeugs geschaffen, zum anderen eine sehr einfache und besonders leicht zu handhabende Verschwenkmöglichkeit des Fräskopfes zusammen mit dem Gehäuse und dem in diesem angeordneten Motor und Getriebe.

Hinsichtlich der Ausbildung des ersten und des zweiten Elements sind die unterschiedlichsten Ausführungen möglich. Beispielsweise ist vorgesehen, daß das erste Element eine im wesentlichen halbzylindrisch ausgebildete, außenverzahnte Oberfläche aufweist, daß das zweite Befestigungselement eine komplementär zu dem ersten Befestigungselement ausgebildete, im wesentlichen halbzylindrisch ausgebildete, innenverzahnte Oberfläche aufweist, und mit dem ersten Befestigungselement mittels einer mit einem Spannrad versehenen und an dem Gehäuse angeordneten Schraube verbindbar ist.

Um insbesondere eine stufenlose Verschwenkung des Fräskopfes zu ermöglichen, ist vorzugsweise vorgesehen, daß das erste und zweite Befestigungselement jeweils aufeinander abgestimmte, selbstzentrierende Spannaufnahmen aufweisen, die durch Spannen mittels eines Spannrads aneinander arretierbar sind.

Um die Einsatzmöglichkeiten des Handwerkzeugs in vorteilhafter Weise zu erweitern, ist an dem Frästisch vorzugsweise eine um 45° geneigte mittige 90°-Führungsnut vorgesehen, die ein um 45° geneigtes Ansetzen des gesamten Handwerkzeugs an einer Kante ermöglicht.

Des weiteren kann vorzugsweise an dem Gehäuse ein Fräsanschlag mittig zum Fräskopf angeordnet werden, der das Fräsen in einem konstanten Abstand von einer Kante ermöglicht.

Um eine Verstellung des Fräsanschlags bis direkt an den Fräskopf zu ermöglichen, kann darüber hinaus der Fräsanschlag vorteilhafterweise eine Aussparung aufweisen, die mit einem Einsteckteil wieder verschließbar ist.

Außerdem weist der Fräsanschlag vorzugsweise eine Bohrung auf, in die eine Zentrierspitze einsetzbar ist, wodurch das Fräsen eines Kreises ermöglicht wird.

Schließlich kann das gesamte Handwerkzeug über seinen Frästisch zur Erweiterung seines Einsatzbereiches auch an einer stationären Befestigungseinrichtung, die beispielsweise ihrerseits wieder an einen Werktisch angeordnet ist, befestigt werden.

Um einen besonders wirkungsvollen Abtransport des beim Fräsen entstehenden Staubs und dgl. zu ermöglichen, sind in dem Gehäuse ein Lüfterrad und auf den Fräskopf gerichtete Lüftungskanäle vorgesehen.

Zum Abtransport der bei dem Fräsen entstehenden Späne, des Staubes und dergleichen sind vorteilhafterweise in dem Gehäuse darüber hinaus Staubabsaugkanäle und ein Anschluß für einen Staubsauger vorgesehen.

Dabei sind die Lüftungskanäle und die Staubabsaugkanäle so angeordnet, daß ein möglichst optimaler Abtransport der beim Einsatz des Handwerkzeugs entstehenden Späne, des Staubes und dgl. möglich ist.

Insbesondere um eine Verletzungsmöglichkeit durch den Fräskopf zu vermeiden, aber auch zur gezielten Umlenkung des aus den Lüftungskanälen strömenden Lüfterstromes in die Staubabsaugkanäle ist an dem Gehäuse eine den Fräskopf umgebende Schutzhaube befestigbar.

Weitere Vorteile von Ausführungsbeispielen der Erfindung sind Gegenstand der nachfolgenden Beschreibung sowie der zeichnerischen Darstellung dieser Ausführungsbeispiele.

In der Zeichnung zeigen:
- Fig. 1: eine teilweise geschnittene Darstellung eines erfindungsgemäßen Handwerkzeugs;
- Fig. 2: eine Seitenansicht eines erfindungsgemäßen Handwerkzeugs;
- Fig. 3: eine weitere Seitenansicht eines erfindungsgemäßen Handwerkzeugs und

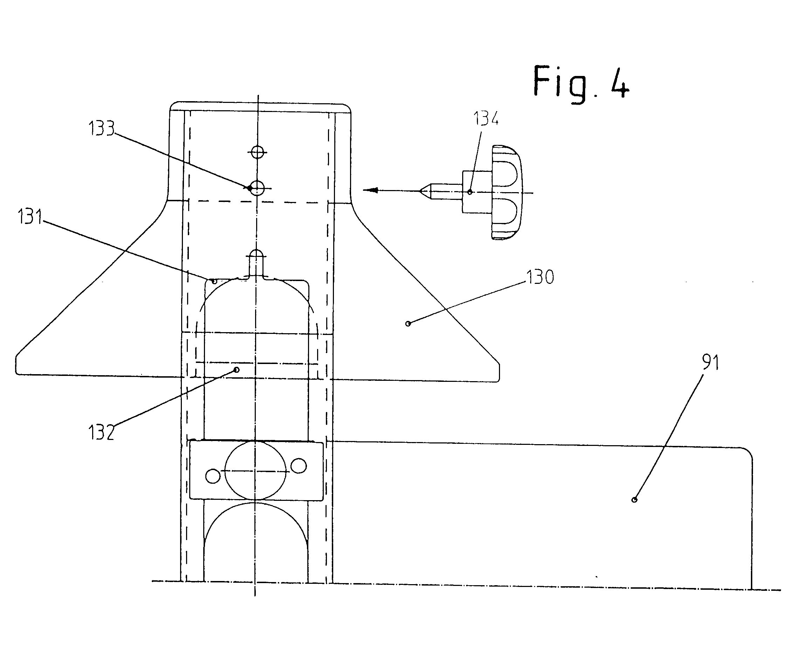

- Fig. 4: eine teilweise weggebrochene Darstellung eines Frästisches mit einem an diesem angeordneten Fräsanschlag.

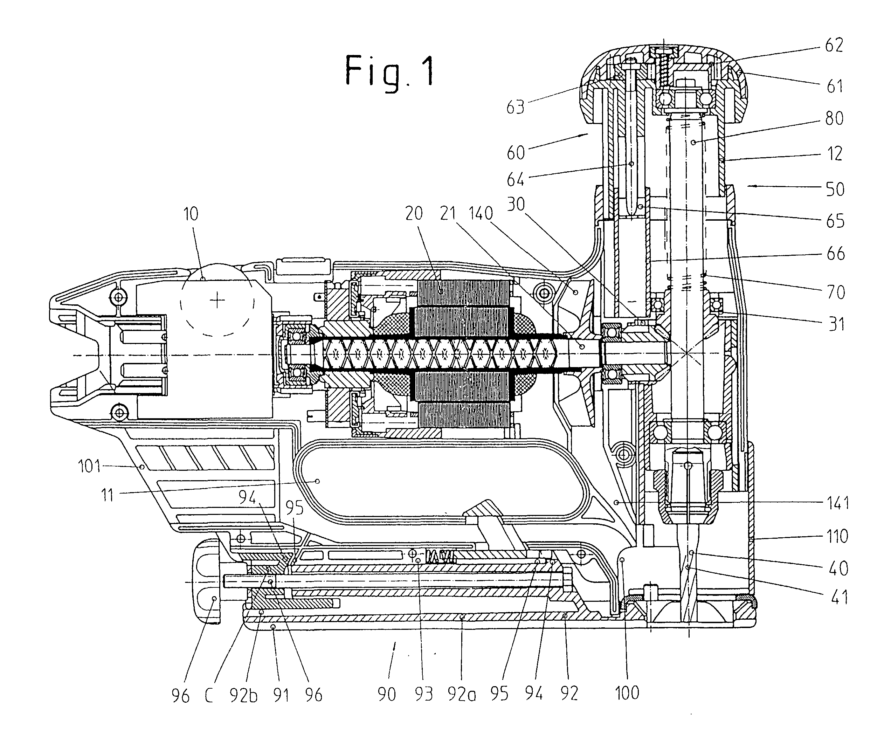

Ein Ausführungsbeispiel einer Handwerkzeugmaschine, dargestellt in Fig. 1, Fig. 2 und Fig. 3, umfaßt ein Gehäuse 10, in welchem ein Motor 20 angeordnet ist und ein diesem nachgeschaltetes Getriebe 30. Durch den Motor 20 ist über das als Winkelgetriebe ausgebildete Getriebe 30 ein Fräskopf 40 antreibbar.

Der Motor 20 ist in dem länglich ausgebildeten Gehäuse 10 derart liegend angeordnet, daß seine Antriebswelle 21 im wesentlichen senkrecht zur Drehachse 41 des Fräskopfes 40 angeordnet ist.

Da der Motor 20 das schwerste Teil in dem Handwerkzeug ist, wird durch diese liegende Anordnung des Motors 20 in dem Gehäuse 10 ein besonders tiefliegender Schwerpunkt und hierdurch eine besonders leichte, insbesonders auch einhändige Handhabbarkeit des gesamten Handwerkzeugs erzielt.

Die liegende Anordnung des Motors 20 ermöglicht insbesondere auch die. Anordnung einer Griffmulde 11 in dem Gehäuse 10 direkt unterhalb des Motors 20.

Um den Fräskopf 40 manuell und ohne Zuhilfenahme von Werkzeug in Vertikalrichtung verstellen zu können und ohne hierbei die Position des liegend angeordneten Motors 20 und des Getriebes 30 zu verändern, ist eine erste Einstelleinrichtung 50 vorgesehen, welche ein vertikal bewegliches Gehäuseteil 12 und ein Arretierelement 60 zur vertikalen Arretierung einer gegen die Vorspannung einer Feder 70 niederdrückbaren, in dem beweglichen Gehäuseteil 12 gelagerten Abtriebswelle 80, die zusammen mit dem beweglichen Gehäuseteil 12 vertikal verschieblich und aufgrund ihrer Ausgestaltung als Mehrkeil- oder Nutenwelle verdrehsicher in einem die Abtriebswelle 80 konzentrisch umgebenden Getriebezahnrad 31 des Winkelgetriebes 30 geführt und mit dem Fräskopf 40 verbunden ist.

Das Arretierelement 60 umfaßt einen in dem beweglichen Gehäuseteil drehbar gelagerten Knauf 61 mit einer Innenverzahnung 62 und ein in die Innenverzahnung 62 eingreifendes Zahnrad 63 sowie eine mit dem Zahnrad 63 verbundene Schraube 64. Durch Drehen des Knaufs 61 und in Folge davon durch übersetztes Drehen des Zahnrades 63 und dadurch auch der Schraube 64 werden an dem unteren, dem Zahnrad 63 abgewandten Ende der Schraube 64 Spannbacken 65 in einer Spannhülse 66 aufgespreizt und hierdurch das bewegliche Gehäuseteil 12 und mit diesem die in ihr gelagerte Abtriebswelle 80 und somit auch der an ihr befestigte Fräskopf 40 in einer vorgegebenen vertikalen Position festgeklemmt.

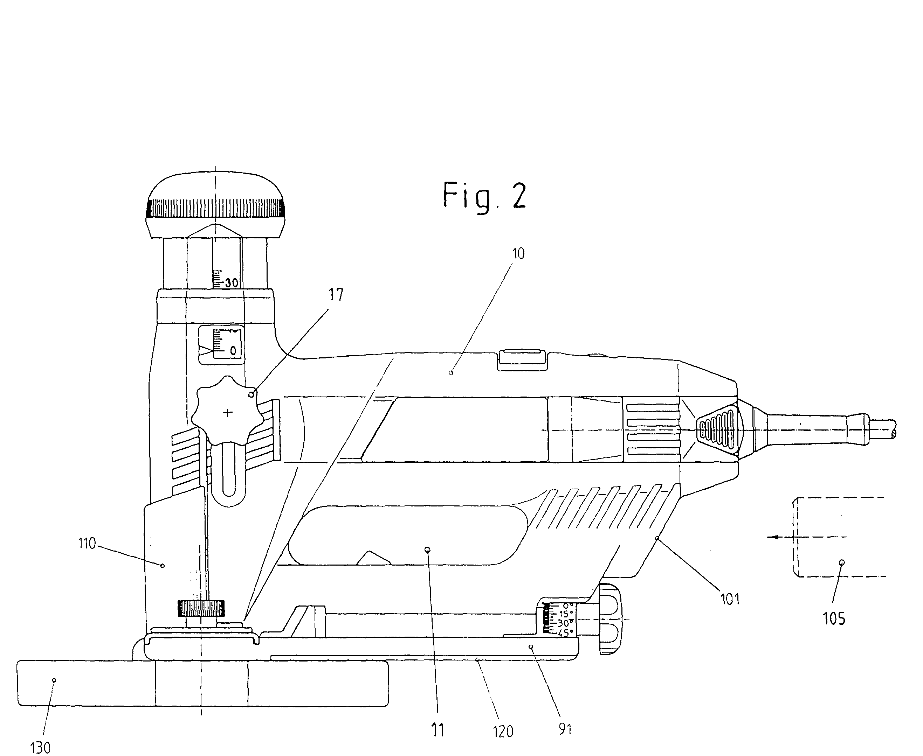

Wie aus Fig. 2 hervorgeht, kann an dem Gehäuse 10 ein skalierter Frästiefenanschlag 13 zum präzisen vertikalen Verstellen des Fräskopfes 40 vorgesehen sein.

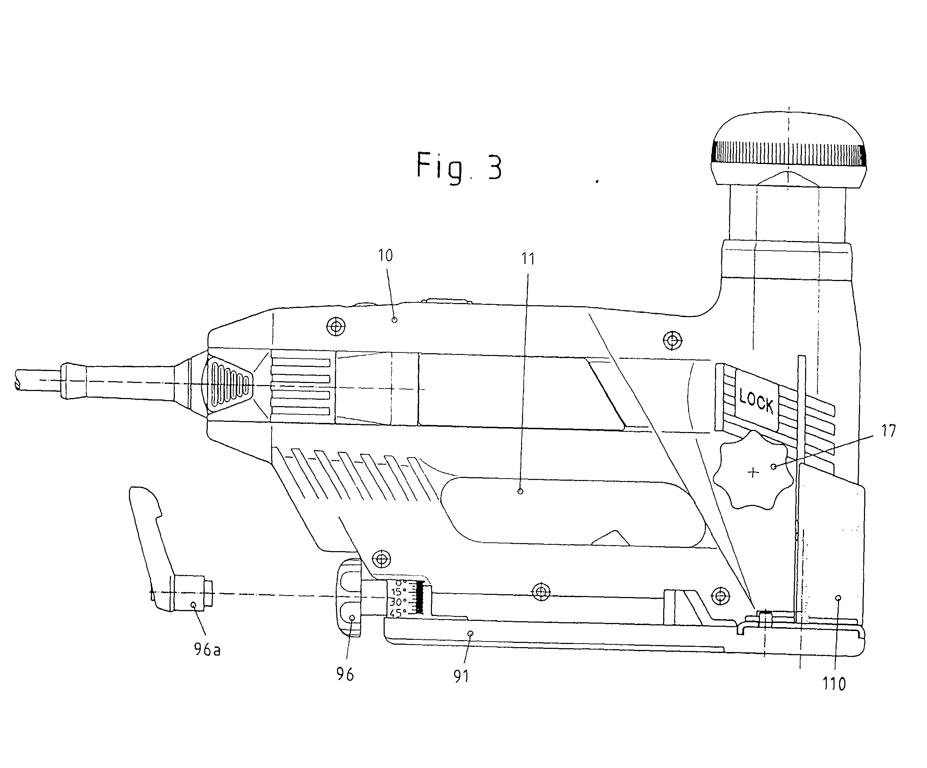

Bei einer anderen, in Fig. 2 und Fig. 3 dargestellten Ausführungsform bildet das Arretierelement eine seitlich an dem Gehäuse 10 angeordnete Spannschraube 17 oder ein Spannhebel (nicht dargestellt), die/der das bewegliche Gehäuseteil 12 in dem Gehäuse 10 festklemmt.

Zur seitlichen Verschwenkung des Fräskopfes 40 ist eine zweite Einstelleinrichtung 90 vorgesehen, die einen Frästisch 91 mit einem mit diesem verbundenen ersten Element 92 umfaßt, welches an einem auf das erste Element 92 angepaßten, an dem Gehäuse 10 angeordneten zweiten Element 93 arretierbar ist. Sowohl das erste Element 92 als auch das zweite Element 93 können dabei jeweils als aufeinander abgestimmte, selbstzentrierende Spannaufnahmen 94, 95 - beispielsweise wie in Fig. 1 dargestellt als Schwalbenschwanzführung - ausgebildet sein, die durch Spannen mittels eines Spannrads 96 oder Spannhebels 96a (vergl. Fig. 3) aneinander arretierbar sind. Dabei umfaßt das erste Element 92 einen im wesentlichen feststehenden Teil 92a und einen durch Drehen des Spannrades 96 und der mit diesem verbundenen Schraube 96a translatorisch beweglichen zweiten Teil 92b, an dem eine der beiden Spannaufnahmen 94 des ersten Elementes 92 angeordnet ist (Fig. 1).

Bei einer anderen (nicht dargestellten) Ausführungsform der zweiten Einstelleinrichtung 90 weist das erste Element 92 eine im wesentlich halbzylindrisch ausgebildete, außenverzahnte Oberfläche auf, wohingegen das zweite Element 93 eine komplementär zu dem ersten Element 92 ausgebildete, im wesentlichen halbzylindrisch ausgebildete, innenverzahnte Oberfläche aufweist. In diesem Fall ist das erste Element 92 mittels einer mit einem Spannrad versehenen und an dem Gehäuse 10 angeordneten Schraube arretierbar. Eine solche Einstelleinrichtung geht beispielsweise aus der nicht veröffentlichten europäischen Patentanmeldung EP 94119921 hervor, auf die für vorliegende Anmeldung Bezug genommen wird.

Um die beim Fräsen entstehenden Späne, den Staub und dgl. wirkungsvoll abtransportieren zu können, ist in dem Gehäuse 10 ein Lüfterrad 140 zwischen dem Motor 20 und dem Getriebe 30 angeordnet, welches mit einem Lüfterkanal 141 verbunden ist, der auf das untere Ende des Fräskopfes gerichtet ist.

Benachbart zu dem Fräskopf 40 verläuft zu dem Lüfterkanal 141 parallel ein Staubabsaugkanal 100, der in einen Staubabsauganschluß 101 mündet. An dem Staubabsauganschluß 101 ist ein gewöhnlicher Staubsauger 105 anschließbar (vgl. Fig. 2).

Wie insbesondere aus Fig. 1, Fig. 2 und Fig. 3 hervorgeht, ist darüber hinaus an dem Gehäuse 10 im Bereich des Fräskopfes 40 eine Schutzhaube 110 befestigbar, die den Fräskopf 40 vollständig umgibt und dabei nicht nur das Verletzungsrisiko durch den Fräskopf 40 mindert, sondern auch gleichzeitig eine Umlenkung des von dem Lüfterrad erzeugten und über den Lüfterkanal 141 auf den Fräskopf gelenkten Luftstrahls in den Staubabsaugkanal 100 ermöglicht.

Durch diese Umlenkung der Luft werden durch das Fräsen entstehende Späne, Staub und dgl. auf besonders wirkungsvolle Weise abtransportiert.

Um das Werkzeug möglichst universell einsetzen zu können, ist an dem Frästisch 91 eine um 45° geneigte mittige rechtwinklige (90°-)Führungsnut 120 angeordnet, welche ein um 45° verschwenktes Ansetzen des gesamten Handwerkzeugs einschließlich des Frästisches 91 ermöglicht.

Darüber hinaus kann mittig zu dem Fräskopf 40 an dem Gehäuse 10 ein Fräsanschlag 130 angeordnet werden. Der Fräsanschlag 130 weist eine Aussparung 131 auf, die ein Zustellen des Fräsanschlags direkt bis zum Fräskopf ermöglicht und mit einem Einsteckteil 132 verschließbar ist. Aufgrund der mittigen Anordnung des Fräsanschlags 130 kann das Handwerkzeug in besonders vorteilhafter Weise sowohl auf der linken als auch auf der rechten Seite eines zu bearbeitenden Werkstücks angesetzt werden.

Darüber hinaus ist an dem Fräsanschlag 130 eine Bohrung 133 vorgesehen, in die eine am Fräsanschlag 130 selbst abnehmbar befestigte Zentrierspitze 134 einsetzbar ist. Auf diese Weise kann das Handwerkzeug zum Fräsen von Kreisen verwendet werden. Schließlich kann das gesamte Handwerkzeug an einer (nicht dargestellten) stationären Befestigungseinrichtung, die ihrerseits beispielsweise an einem Werktisch befestigt ist, befestigt werden.

Der große Vorteil des oben beschriebenen Handwerkzeugs ist, daß es durch seine unterschiedlichen Verstell- und Verschwenkmöglichkeiten sowie durch die Ausgestaltung seines Frästisches und des Anschlags auf die unterschiedlichste Weise eingesetzt werden kann und dabei sowohl als Fräse, als auch beispielsweise als Säge oder sogar als Bohrer verwendet werden kann. Das Handwerkzeug stellt also gewissermaßen ein Multifunktionswerkzeug dar, das vielleicht am besten als "Stichfräse" bezeichnet werden könnte.

## Patentansprüche

1. Handwerkzeug mit einem länglichen Gehäuse (10) mit einem in dem Gehäuse (10) angeordneten Motor (20) und mit einem von dem Motor (20) über ein Getriebe (30) angetriebenen, vertikal zur Längsrichtung verstellbaren Fräskopf (40), wobei der Motor (20) derart liegend in Längsrichtung angeordnet ist, daß seine horizontale Antriebswelle (21) im wesentlichen senkrecht zur vertikalen Drehachse (41) des Fräskopfes (40) angeordnet ist, und wobei eine erste Einstelleinrichtung (50) vorgesehen ist, welche eine manuelle, werkzeuglose Einstellung des Fräskopfes (40) in Vertikalrichtung ohne Veränderung der Lage des Motors (20) und des Getriebes (30) ermöglicht, und wobei eine zweite Einstelleinrichtung (90) vorgesehen ist, welche manuell und werkzeuglos eine seitliche Verschwenkung des Fräskopfes (40) ermöglicht.

2. Handwerkzeug nach Anspruch 1, **dadurch gekennzeichnet, daß** das Getriebe (30) ein Winkelgetriebe ist.

3. Handwerkzeug nach Anspruch 2, **dadurch gekennzeichnet, daß** das Winkelgetriebe sowohl eine drehzahlerhöhende als auch eine drehzahlerniedrigende und dabei drehmomenterhöhende Übersetzung aufweist.

4. Handwerkzeug nach einem der voranstehenden Ansprüche, **dadurch gekennzeichnet, daß** die erste Einstelleinrichtung (50) ein vertikal bewegliches Gehäuseteil (12) und ein Arretierelement (60) zur vertikalen Arretierung einer gegen die Vorspannung einer Feder (70) niederdrückbaren, in dem beweglichen Gehäuseteil (12) gelagerten Abtriebswelle (80) umfaßt, die zusammen mit dem beweglichen Gehäuseteil (12) vertikal verschieblich und verdrehsicher in wenigstens einem die Abtriebswelle (80) konzentrisch umgebenden Getriebezahnrad (31) des Winkelgetriebes geführt und mit dem Fräskopf (40) verbunden ist.

5. Handwerkzeug nach Anspruch 4, **dadurch gekennzeichnet, daß** das Arretierelement (60) einen in dem beweglichen Gehäuseteil (12) drehbar gelagerten Knauf (61) mit einer Innenverzahnung (62) und ein in die Innenverzahnung (62) eingreifendes Zahnrad (63) sowie eine mit dem Zahnrad (63) verbundene Schraube (64) umfaßt, die durch Drehen des Knaufs (61) das bewegliche Gehäuseteil (12) festklemmt.

6. Handwerkzeug nach Anspruch 5, **dadurch gekennzeichnet, daß** die Schraube (64) an ihrem unteren, dem Zahnrad (63) abgewandten Ende Spannbacken (65) in einer Spannhülse (66) aufspreizt.

7. Handwerkzeug nach Anspruch 4, **dadurch gekennzeichnet, daß** das Arretierelement (60) eine seitlich an dem Gehäuse (10) angeordnete Spannschraube (17) oder ein Spannhebel ist, die das bewegliche Gehäuseteil (12) in dem Gehäuse (10) festklemmt.

8. Handwerkzeug nach Anspruch 2, **dadurch gekennzeichnet, daß** die Abtriebswelle (80) eine Mehrkeil-oder Nutenwelle ist.

9. Handwerkzeug nach einem der voranstehenden Ansprüche, **dadurch gekennzeichnet, daß** die Antriebsund/oder Abtriebswelle (80) und/oder der Fräskopf (40) über einen gegen eine Rückstellfeder vorgespannten Druckknopf oder eine Lock-Drucktaste arretierbar sind/ist.

10. Handwerkzeug nach Anspruch 1, **dadurch gekennzeichnet, daß** die zweite Einstelleinrichtung (90 einen Frästisch (91) mit einem mit diesem verbundenen ersten Element (92) umfaßt, welches an einem auf das erste Element (92) angepaßten, an dem Gehäuse (10) befestigten zweiten Element (93) arretierbar ist.

11. Handwerkzeug nach Anspruch 10, **dadurch gekennzeichnet, daß** das erste Element (92) eine im wesentlichen halbzylindrisch ausgebildete, außenverzahnte Oberfläche aufweist, daß das zweite Element (93) eine komplementär zu dem ersten Element (92) ausgebildete, im wesentlichen halbzylindrisch ausgebildete, innenverzahnte Oberfläche aufweist und an dem ersten Element (90) mittels einer mit einem Spannrad (96) oder Spannhebel (96a) versehenen und an dem Gehäuse (10) angeordneten Schraube arretierbar ist.

12. Handwerkzeug nach Anspruch 10, **dadurch gekennzeichnet, daß** das erste und zweite Element (92, 93) jeweils aufeinander abgestimmte, selbst zentrierende Spannaufnahmen (94, 95) aufweisen, die durch Drehen einer mit einem Spannrad (96) oder Spannhebel (96a) versehenen Schraube (96b) aneinander verspannbar und dadurch arretierbar sind.

13. Handwerkzeug nach einem der Ansprüche 10 bis 12, **dadurch gekennzeichnet, daß** der Frästisch (91) eine um 45° geneigte mittige rechtwinklige Führungsnut (120) aufweist.

14. Handwerkzeug nach einem der voranstehenden Ansprüche, **dadurch gekennzeichnet, daß** an dem Gehäuse (10) ein Fräsanschlag (130) mittig zum Fräskopf (40) anordenbar ist.

15. Handwerkzeug nach Anspruch 14, **dadurch gekennzeichnet, daß** der Fräsanschlag (130) eine Aussparung (131) aufweist, die mit einem Einsteckteil (132) verschließbar ist.

16. Handwerkzeug nach Anspruch 14 oder 15, **dadurch gekennzeichnet, daß** der Fräsanschlag (130) eine Bohrung (133) aufweist, in die eine Zentrierspitze (134) einsetzbar ist.

17. Handwerkzeug nach einem der Ansprüche 10 bis 16, **dadurch gekennzeichnet, daß** das gesamte Handwerkzeug über seinen Frästisch (91) an einer stationären Befestigungseinrichtung befestigbar ist.

18. Handwerkzeug nach einem der voranstehenden Ansprüche, **dadurch gekennzeichnet, daß** in dem Gehäuse (10) ein Lüfterrad (140) und auf den Fräskopf (40) gerichtete Lüftungskanäle (141) vorgesehen sind.

19. Handwerkzeug nach einem der voranstehenden Ansprüche, **dadurch gekennzeichnet, daß** in dem Gehäuse (10) Staubabsaugkanäle (100) und ein Staubsaugeranschluß (101) für einen an sich bekannten Staubsauger vorgesehen sind.

20. Handwerkzeug nach einem der voranstehenden Ansprüche, **dadurch gekennzeichnet, daß** an dem Gehäuse (10) eine den Fräskopf (40) umgebende Schutzhaube (110) befestigbar ist.

21. Handwerkzeug nach einem der voranstehenden Ansprüche, **dadurch gekennzeichnet, daß** die Frästiefe über einen skalierten Frästiefenanschlag (13) vorwählbar und mit einem Spannrad oder Spannhebel (17) arretierbar ist.

## Claims

1. A hand tool with an elongated housing (10) having a motor (20) arranged within the housing (10) and having a cutter head (40) driven by the motor (20) via a gear (30) and adjustable vertically relative to the longitudinal direction, wherein the motor (20) is arranged lying in a longitudinal, direction in such a way that its horizontal drive shaft (21) is arranged substantially perpendicularly to the vertical axis of rotation (41) of the cutter head (40), and wherein a first setting device (50) is provided, which enables manual, tool-free setting of the cutter head (40) in the vertical direction without changing the position of the motor (20) and of the gear (30), and wherein a second setting device (90) is provided, which enables a lateral swivelling of the cutter head (40) manually and without tools.

2. A hand tool according to Claim 1, **characterised in that** the gear (30) is an angular gear.

3. A hand tool according to Claim 1, **characterised in that** the angular gear has both a speed-increasing and a speed-decreasing, and thus torque-increasing, transmission.

4. A hand tool according to one of the preceding claims, **characterised in that** the first setting device (50) comprises a vertically movable housing part (12) and a stop member (60) for vertically stopping a drive shaft (80) which can be pressed down against the prestressing of a spring (70) and is mounted within the movable housing part (12), and which - together with the movable housing part (12) - is guided, vertically displaceable and protected against torsion, within at least one toothed gear wheel (31) of the angular gear - which gear wheel concentrically surrounds the drive shaft (80) - and is connected to the cutter head (40).

5. A hand tool according to Claim 4, **characterised in that** the stop member (60) comprises a knob (61) rotatably mounted within the movable housing part (12), with internal toothing (62), and a toothed wheel (63) engaging into the internal toothing (62), as well as a screw (64) connected to the toothed wheel (63) which screw clamps the movable housing part (12) by turning the knob (61).

6. A hand tool according to Claim 5, **characterised in that** the screw (64) splays open clamping jaws (65) in a clamping sleeve (66) on its own lower end facing away from the toothed wheel (63).

7. A hand tool according to Claim 4, **characterised in that** the stop member (60) is a clamping lever or clamping screw (17) which is arranged laterally on the housing (10) and which clamps the movable housing part (12) within the housing (10).

8. A hand tool according to Claim 2, **characterised in that** the drive shaft (80) is a multisplined shaft or a spline shaft.

9. A hand tool according to one of the preceding claims, **characterised in that** the motor shaft and/or output shaft (80) and/or the cutter head (40) is/are stoppable by means of a push button or a locking push key prestressed against a readjusting spring.

10. A hand tool according to Claim 1, **characterised in that** the second setting device (90) comprises a cutting table (91) with a first member (92) connected thereto, which first member is stoppable on a second member (93) matched to the first member (92) and fixed to the housing (10).

11. A hand tool according to Claim 10, **characterised in that** the first member (92) has a substantially semicylindrical surface which is toothed on the outside, [and] that the second member (93) has a substantially semicylindrical surface toothed on the inside, which is complementary to the first member (92), and is stoppable on the first member (90) by means of a screw fitted with a clamping wheel (96) or clamping lever (96a) and arranged on the housing (10).

12. A hand tool according to Claim 10, **characterised in that** the first and second members (92, 93) have self-centring clamping seats (94, 95) in each case matched to one another which, by turning of a screw (96b) fitted with a clamping wheel (96) or clamping lever (96a) are braceable against one another and thus stoppable.

13. A hand tool according to one of Claims 10 to 12, **characterised in that** the cutting table (91) has a central rectangular guide groove (120) inclined at an angle of 45°.

14. A hand tool according to one of the preceding claims, **characterised in that** a cutter stop (130) is arrangeable on the housing (10) centrally to the cutter head (40).

15. A hand tool according to Claim 14, **characterised in that** the cutter stop (130) has a recess (131) which is closable with an insert part (132).

16. A hand tool according to Claim 14 or 15, **characterised in that** the cutter stop (130) has a bore (133) into which a centre point (134) is insertable.

17. A hand tool according to one of claims 10 to 16, **characterised in that** the whole tool is fixable to a stationary fastening device via its cutting table (91).

18. A hand tool according to one of the preceding claims, **characterised in that** a fan wheel (140) and ventilation channels (141) directed towards the cutter head (40) are provided within the housing (10).

19. A hand tool according to one of the preceding claims, **characterised in that** vacuum-cleaner channels (100) and a vacuum-cleaner connection (101) for a vacuum cleaner which is known per se are provided within the housing (10).

20. A hand tool according to one of the preceding claims, **characterised in that** a protective hood (110) surrounding the cutter head (40) is attachable to the housing (10).

21. A hand tool according to one of the preceding claims, **characterised in that** the cutting depth is pre-selectable by means of a graduated cutting-depth stop (13) and stoppable with a clamping wheel or clamping lever (17).

## Revendications

1. Outil à main comportant un boîtier allongé (10) logeant un moteur (20) et une tête de fraise (40) réglable verticalement par rapport à la direction longitudinale, cette tête étant entraînée par le moteur (20) par l'intermédiaire d'une transmission (30),
le moteur (20) étant couché dans la direction longitudinale pour que son arbre d'entraînement horizontal (21) soit essentiellement perpendiculaire à l'axe vertical de rotation (41) de la tête de fraise (40), avec
une première installation de réglage (50) permettant le réglage manuel sans outil de la tête de fraise (40) dans la direction verticale sans modifier la position du moteur (20) et de la transmission (30), et
avec une seconde installation de réglage (90) permettant de régler manuellement et sans outil un basculement latéral la tête de fraise (40).

2. Outil à main selon la revendication 1,
**caractérisé en ce que**
la transmission (30) est une transmission à renvoi angulaire.

3. Outil à main selon la revendication 2,
**caractérisé en ce que**
la transmission à renvoi angulaire comporte une démultiplication qui augmente ou diminue la vitesse de rotation et ainsi la démultiplication du couple.

4. Outil à main selon l'une des revendications précédentes,
**caractérisé en ce que**
la première installation de réglage (50) comprend une partie de boîtier (12) mobile verticalement et un élément de blocage (60) pour bloquer verticalement un arbre de sortie (80) monté dans la partie mobile (12) du boîtier et qui peut être enfoncé contre la précontrainte d'un ressort (70), cet arbre de sortie étant coulissant verticalement avec la partie mobile de boîtier (12) en étant bloqué en rotation dans au moins une roue dentée de transmission (31) du renvoi d'angle, cette roue entourant concentriquement l'arbre de sortie (80) relié à la tête de fraise (40).

5. Outil à main selon la revendication 4,
**caractérisé en ce que**
l'élément de blocage (60) comprend une poignée (61) montée à rotation dans la partie mobile (12) du boîtier, cette poignée ayant une denture intérieure (62) ainsi qu'une roue dentée (63) engrenant avec la denture intérieure (62) et une vis (64) reliée à la roue dentée (63), vis qui en tournant la poignée (61), bloque la partie de boîtier (12) mobile.

6. Outil à main selon la revendication 5,
**caractérisé en ce que**
la vis (64) ouvre au niveau de son extrémité inférieure à l'opposé de la roue dentée (63), les mors de serrage (65) d'un manchon de serrage (66).

7. Outil à main selon la revendication 4,
**caractérisé en ce que**
l'élément de blocage (60) comporte une vis de serrage (17) ou un levier de serrage prévu latéralement sur le boîtier (10) pour serrer la partie mobile de boîtier (12) dans le boîtier (10).

8. Outil à main selon la revendication 2,
**caractérisé en ce que**
l'arbre de sortie (80) est un arbre cannelé ou à rainure.

9. Outil à main selon l'une des revendications précédentes,
**caractérisé en ce que**
l'arbre d'entraînement et/ou de sortie (80) et/ou la tête de fraise (40) est/sont blocable(s) par un bouton poussoir précontraint contre un ressort de rappel ou par une touche de pression de verrouillage.

10. Outil à main selon la revendication 1,
**caractérisé en ce que**
la seconde installation de réglage (90) comprend un plateau de fraise (91) avec un premier élément (92) relié à celui-ci et qui peut se bloquer sur un second élément (93) fixé au boîtier (10) et adapté au premier élément (92).

11. Outil à main selon la revendication 10,
**caractérisé en ce que**
le premier élément (92) présente une surface supérieure à denture extérieure essentiellement de forme semi-cylindrique,
le second élément (93) présente une surface supérieure à denture intérieure, complémentaire au premier élément (92), et de forme essentiellement semi-cylindrique et peut être bloqué sur le premier élément (92) à l'aide d'une vis installée sur le boîtier (10) et munie d'une molette de serrage (96) ou d'un levier de serrage (96a).

12. Outil à main selon la revendication 11,
**caractérisé en ce que**
le premier et le second éléments (92, 93) ont des logements de serrage (94, 95) autocentrés, accordés chaque fois l'un par rapport à l'autre et qui se serrent l'un par rapport à l'autre et se bloquent en tournant une vis (96b) munie d'une molette de serrage (96) ou d'un levier de serrage (96a).

13. Outil à main selon l'une quelconque des revendications 10 à 12,
**caractérisé en ce que**
le plateau de fraise (91) présente une rainure de guidage (120), centrale rectangulaire, inclinée de 45°.

14. Outil à main selon l'une quelconque des revendications précédentes,
**caractérisé en ce que**
le boîtier (10) comporte une butée de fraise (130) au milieu par rapport à la tète de fraise (40).

15. Outil à main selon la revendication 14,
**caractérisé en ce que**
la butée de fraise (130) comporte une cavité (131) qui se ferme à l'aide d'une partie enfichée (132).

16. Outil à main selon les revendications 14 ou 15,
**caractérisé en ce que**
la butée de fraise (130) comporte un perçage (133) dans lequel se place une broche de centrage (134).

17. Outil à main selon l'une quelconque des revendications 10 à 16,
**caractérisé en ce que**
l'ensemble de l'outil à main se fixe par son plateau de fraise (91) dans une installation de fixation à poste fixe.

18. Outil à main selon l'une des revendications précédentes,
**caractérisé en ce que**
le boîtier (10) loge un rotor de ventilateur (140) et des canaux de ventilation (141), dirigés vers la tête de fraise (40).

19. Outil à main selon l'une des revendications précédentes,
**caractérisé en ce que**
le boîtier (10) comporte des canaux d'aspiration de poussière (100) ainsi qu'un branchement d'aspirateur (101) pour un aspirateur connu en soi.

20. Outil à main selon l'une des revendications précédentes,
**caractérisé par**
un capot protecteur (110) entourant la tête de fraise (40) et qui se fixe du boîtier (10).

21. Outil à main selon l'une des revendications précédentes,
**caractérisé en ce que**
la profondeur de fraisage se présélectionne par une butée de profondeur de fraisage (13) graduée et le blocage se fait à l'aide d'une molette de serrage ou d'un levier de serrage (17).
